(19) Europäisches Patentamt
European Patent Office
Office européen des brevets

(11) **EP 3 598 776 A1**

(12) **EUROPEAN PATENT APPLICATION**

(43) Date of publication:
**22.01.2020 Bulletin 2020/04**

(51) Int Cl.:
***H04R 25/00*** *(2006.01)* ***H01Q 1/27*** *(2006.01)*
***H04B 1/18*** *(2006.01)*

(21) Application number: **18213962.6**

(22) Date of filing: **19.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GN Hearing A/S**
**2750 Ballerup (DK)**

(72) Inventor: **RASMUSSEN, Benny Bøgvad**
**DK-2750 Ballerup (DK)**

(74) Representative: **Zacco Denmark A/S**
**Arne Jacobsens Allé 15**
**2300 Copenhagen S (DK)**

(54) **MULTI-FREQUENCY SEPARATION**

(57) Disclosed is a method and a hearing device, the hearing device comprising one or more wireless communication units connected with an impedance matching component. The impedance matching component being configured for receiving at least a first signal having a first frequency and a second signal having a second frequency. The impedance matching component comprising: a first impedance matching component for the first signal, comprising a first decoupling element and a first impedance matching circuit; and a second impedance matching component for the second signal, comprising a second decoupling element and a second impedance matching circuit. Wherein the first impedance matching component provides a first impedance matched signal having the first frequency to one of the one or more wireless communication unit, and the second impedance matching component provides a second impedance matched signal having the second frequency to one of the one or more wireless communication unit.

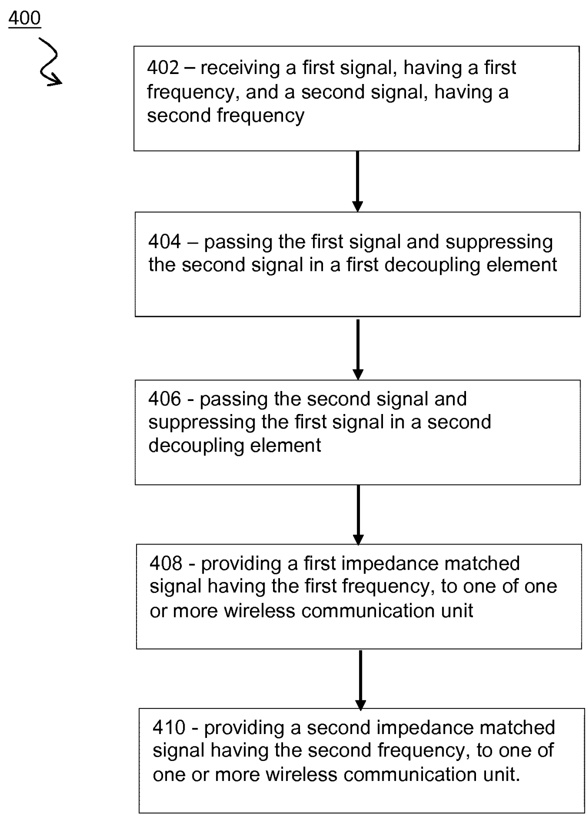


*Fig. 4*

EP 3 598 776 A1

## Description

### FIELD

The present disclosure relates to a method and a hearing device, the hearing device comprising one or more wireless communication units connected with an impedance matching component. The impedance matching component is configured for receiving at least a first signal having a first frequency and a second signal having a second frequency. The impedance matching component comprises a first impedance matching component for the first signal and a second impedance matching component for the second signal.

### BACKGROUND

Hearing devices, such as hearing aids, may comprise an antenna and a wireless communication unit for communication with another hearing device in a binaural hearing device system, and/or for communication with other electronic devices, such as smart phones etc.

However, there is a need for an improved hearing device providing communication with other hearing devices or electronic devices.

### SUMMARY

Disclosed is a hearing device comprising one or more wireless communication units connected with an impedance matching component. The impedance matching component is configured for receiving at least a first signal having a first frequency and a second signal having a second frequency. The impedance matching component comprises a first impedance matching component for the first signal. The first impedance matching component comprises a first decoupling element and a first impedance matching circuit. The impedance matching component comprises a second impedance matching component for the second signal. The second impedance matching component comprises a second decoupling element and a second impedance matching circuit. The first impedance matching component provides a first impedance matched signal, having the first frequency, to one of the one or more wireless communication unit. The second impedance matching component provides a second impedance matched signal, having the second frequency, to one of the one or more wireless communication unit.

It is an advantage that the connection between antenna(s), providing the first and second signals, and the wireless communication unit(s) can be made without considering the number of inputs or outputs on either side, i.e. without considering the number of antennas or the number of wireless communication units. The antenna(s) can be designed with a number of in/output that solely benefit the performance of the antenna(s). Likewise, the wireless communication unit(s) can be designed with a number of in/output that solely benefit the performance of the wireless communication unit(s).

It is an advantage that the first impedance matching component provides a first impedance matched signal, having the first frequency, to one of the one or more wireless communication unit.

It is an advantage that the second impedance matching component provides a second impedance matched signal, having the second frequency, to one of the one or more wireless communication unit.

Thus, it is an advantage that impedance matched signals having the desired frequency are provided independent of the number of antennas, or antenna outputs, in the hearing device, and independent on the number of wireless communications units, or outputs, in the hearing device.

Some antennas have one input/output, other antennas have more than one input/output. Some wireless communications units have one input/output, other wireless communications units have more than one input/output. Antennas with one input/output may have different properties than antennas having multiple input/output. Wireless communications units with one input/output may have different properties than wireless communications units having multiple input/output.

It is an advantage that the connections between the antenna structures and the wireless communication units can be made without considering the number of inputs/outputs on the antenna side or on the wireless communication side.

Thus, it is an advantage that the hearing device provides improved communication with other hearing devices or electronic devices.

Radio connectivity between hearing devices may allow for advanced binaural signal processing when the ear-to-ear (E2E) link is ensured. Furthermore, the hearing devices may be connected to a plethora of electronic devices or accessories, that can be either body-worn or placed in the user's proximity, and hence to the internet as part of the so-called internet of things (IoT). It is a desire to ensure a stable E2E link. The 2.4 GHz ISM band may be preferred due to the presence of many harmonized standards for low-power communications, such as BLE or ZigBee, its worldwide availability for industrial use, and the trade-off between power consumption and range that can be achieved. Thus, the 2.4 GHz band may be used for hearing device communication. Now, the 1.6 GHz ISM band may also be made available for use with hearing devices.

The E2E link may fulfill requirements on the wearable antenna design and performance. In order to achieve a good on-body performance, the antenna may exhibit optimal radiation efficiency, bandwidth, polarization, and radiation pattern, while the volume available for the design is reduced, as most times space comes at a premium in wearable devices such as in hearing aid, in particular in ITE hearing aids. Furthermore, mass production and industrial design needs may demand the antenna to be as well low-profile, lightweight, and inexpensive to manufacture. Various overall constrains may be relevant. The efficiency may be jeopardized by the proximity of the antenna to the human head, as the body tissues have high losses around 2.4 GHz due to the high water content. This may critically impact the overall performance given the magnitude of the drop in efficiency and the fact that the hearing device radios may operate in ultra-low-power regime. Another issue threatening antenna efficiency is the little volume available for the design, as this necessarily brings the antenna in close physical, hence, electrical as well, proximity of other parts of the device, with a strong likelihood of coupling to them. A large bandwidth is as well hard to achieve for an electrically small antenna due to its fundamental limits. The bandwidth may cover at least the whole 2.4 GHz ISM band, such as a bandwidth of 2.45 GHz +/- 2.5 %, such as 2.45 GHz +/- 5% and/or a bandwidth around 1.6 GHz, such as a bandwidth of 1.6 GHz +/- 2.5 %, such as 1.6 GHz +/- 5%, but a larger bandwidth may help to compensate for the detuning of the antenna caused by the body, that varies across users.

It is an advantage that the hearing device may use the 2.4 GHz frequency band and/or the 1.6 GHz frequency band.

The first frequency of the first signal may be 1.6 GHz. The first frequency of the first signal may be 2.4 GHz.

The second frequency of the second signal may be 2.4 GHz. The second frequency of the second signal may be 1.6 GHz.

It is an advantage that the first signal having the first frequency can pass through the first impedance matching component because when the impedance is high at the second frequency, the second signal having the second frequency is suppressed.

Likewise, it is an advantage that the second signal having the second frequency can pass through the second impedance matching component because when the impedance is high at the first frequency, the first signal having the first frequency is suppressed.

The impedance matching component, such as the first impedance matching component and/or the second impedance matching component, is configured for performing impedance matching. Impedance matching comprises designing the input impedance of an electrical load or the output impedance of its corresponding signal source to maximize the power transfer or minimize signal reflection from the load.

In the case of a complex source impedance ZS and load impedance ZL, maximum power transfer is obtained when ZS = ZL*, where the asterisk (*) indicates the complex conjugate of the variable. Where ZS represents the characteristic impedance of a transmission line, minimum reflection is obtained when ZS=ZL.

Impedance is the opposition by a system to the flow of energy from a source. For constant signals, this impedance may be constant. For varying signals, the impedance may change with frequency. The energy involved may be electrical, mechanical, acoustic, magnetic, or thermal. Electrical impedance, like electrical resistance, is measured in ohms. In general, impedance has a complex value; this means that loads generally have a resistance component (R) which forms the real part of Z and a reactance component (X) which forms the imaginary part of Z.

Impedance matching to minimize reflections may be achieved by making the load impedance equal to the source impedance. If the source impedance, load impedance and transmission line characteristic impedance are purely resistive, then reflection-less matching may be the same as maximum power transfer matching.

The one or more wireless communication units may be configured for wireless communication, including wireless data communication, and is in this respect interconnected with the antenna for emission and reception of an electromagnetic field. The wireless communication unit may comprise a transmitter, a receiver, a transmitter-receiver pair, such as a transceiver, a radio, a radio circuit, etc. The wireless communication unit may be configured for communication using any protocol as known for a person skilled in the art, including Bluetooth, including Bluetooth Low Energy, Bluetooth Smart, etc., WLAN standards, manufacture specific protocols, such as tailored proximity antenna protocols, such as proprietary protocols, such as low-power wireless communication protocols, such as CSR mesh, etc.

The decoupling elements may be splitters, separators, filters, etc.

The hearing device may comprise a microphone, a processor, a receiver or speaker, etc.

The hearing device may be a hearing aid configured for hearing loss compensating for a user wearing the hearing device.

The hearing device may be an ear protection device or a hearing protection device.

The hearing device may be a noise protection device.

The hearing device may be for audio streaming of e.g. music, phone calls, etc.

The hearing device may be configured for one or more of hearing loss compensation, noise protections, ear protection, hearing protection, audio streaming etc.

The hearing device may be an in-the-ear (ITE) hearing device, in-the-canal (ITC) hearing device, completely-in-canal (CIC) hearing device, or invisible-in-the-canal (IIC) hearing device.

The hearing device may be a receiver-in-the-ear (RITE) hearing device, receiver-in-the-ear (RIE) hearing aid, or a receiver-in-canal (RIC) hearing device. The hearing device may be a behind-the-ear (BTE) hearing device, e.g. where the receiver is arranged in a housing configured to be positioned behind the ear of a user.

BTE hearing devices may comprise a case, which hangs behind the pinna. The case may be attached to the earpiece or to a dome tip by a traditional tube, slim tube, or wire. The tube or wire may extend from the superior-ventral portion of the pinna to the concha, where the earpiece or dome tip inserts into the external auditory canal. The case may contain the electronics, controls, battery, and microphone(s).The loudspeaker, or receiver, may be housed in the case, e.g. a traditional BTE, or in the earpiece or dome tip, e.g. a receiver-in-the-canal (RIC).

In some embodiments, the first decoupling element is configured for providing the first signal to the first impedance matching circuit, and the second decoupling element is configured for providing the second signal to the second impedance matching circuit. This may apply when one antenna, e.g. a first antenna, provides both the first signal, having the first frequency, and provides the second signal, having the second frequency. The first signal and the second signal may be a combined signal. The first signal and the second signal may be provided to the impedance matching component using a same electrical conductor from e.g. one or more antennas. In some embodiments, the impedance matching component has one input, and the first signal and the second signal is provided to the one input of the impedance matching component. In some embodiments, the first decoupling element is configured to receive the first signal and the second signal, and the second decoupling element is configured to receive the first signal and the second signal.

In some embodiments, the one or more wireless communication units comprises a first wireless communication unit, and the first impedance matching circuit provides the first impedance matched signal having the first frequency to the first wireless communication unit, and the second impedance matching circuit provides the second impedance matched signal having the second frequency to the first wireless communication unit. Thus, this may apply when there is one wireless communication unit. Furthermore, this may apply when one antenna, e.g. a first antenna, provides both the first signal, having the first frequency, and provides the second signal, having the second frequency.

In some embodiments, the one or more wireless communication units comprises a first wireless communication unit and a second wireless communication unit, and the first impedance matching circuit provides the first impedance matched signal having the first frequency to the first wireless communication unit, and the second impedance matching circuit provides the second impedance matched signal having the second frequency to the second wireless communication unit. Thus, this may apply when there are more wireless communication units, such as a first wireless communication unit and a second wireless communication unit. Furthermore, this may apply when one antenna, e.g. a first antenna, provides both the first signal, having the first frequency, and provides the second signal, having the second frequency.

In some embodiments, at least one of the one or more wireless communication units is interconnected with one or more antennas, the one or more antennas being configured for emission and reception of one or more electromagnetic signals.

The antenna may be the interface between radio waves propagating through space and electric currents moving in metal conductors, used with a communication unit, such as a transmitter or receiver. In transmission, a radio transmitter may supply an electric current to the antenna's terminals, and the antenna may radiate the energy from the current as electromagnetic waves (radio waves). In reception, the antenna may intercept some of the energy of a radio wave in order to produce an electric current at its terminals, that is applied to a receiver to be amplified.

The antenna may be an array of conductors (elements), electrically connected to the receiver or transmitter. During transmission, the oscillating current applied to the antenna by a transmitter may create an oscillating electric field and magnetic field around the antenna elements. These time-varying fields may radiate energy away from the antenna into space as a moving transverse electromagnetic field wave, a radio wave. Conversely, during reception, the oscillating electric and magnetic fields of an incoming radio wave may exert force on the electrons in the antenna elements, causing them to move back and forth, creating oscillating currents in the antenna. The antenna may be a coil antenna.

The antennas may be designed to transmit and receive radio waves in all horizontal directions equally (omnidirectional antennas), or preferentially in a particular direction (directional or high gain antennas). The antenna may include parasitic elements, , which serve to direct the radio waves into a beam or other desired radiation pattern.

In some embodiments, the one or more antennas comprises a first antenna configured for emission and reception of the first signal having the first frequency and the second signal having the second frequency. Thus, one antenna, being the first antenna provides both the first signal having the first frequency and the second signal having the second frequency. Thus, two signals having different frequencies are provided from the first antenna. The first antenna may have two resonances, being the first frequency f1 and the second frequency f2. The first frequency f1 may for example be 1.6 GHz, and the second frequency f2 may for example be 2.4 GHz.

In some embodiments, the one or more antennas comprises a first antenna configured for emission and reception of the first signal having the first frequency, and a second antenna configured for emission and reception of the second signal having the second frequency. Thus, two antennas, being the first antenna and the second antenna, each provides a signal, being the first signal, having the first frequency, and the second signal, having the second frequency, respectively. Thus, two signals having different frequencies are provided from two antennas. The first antenna may have a first resonance, being the first frequency f1, and the second antenna may have a second resonance being the second frequency f2.

In some embodiments, wherein the first impedance matching circuit is configured for providing the first signal to the first decoupling element, and the second impedance matching circuit is configured for providing the second signal to the second decoupling element. This may apply, when two antennas provide the signals. For example when a first antenna provides the first signal, having the first frequency f1, and a second antenna provides the second signal, having the first frequency f2. As each of the signals, i.e. the first signal and the second signal, have a frequency each, i.e. the first frequency f1 and the second frequency f2, respectively, the signal(s) may not have to be decoupled or separated first. Therefore, the first signal having the first frequency f1 may be provided to the first impedance matching circuit, and the first impedance matching circuit may then provide the first signal to the first decoupling element, before the first signal is provided to the wireless communication unit. Likewise, the second signal having the second frequency f2 may be provided to the second impedance matching circuit, and the second impedance matching circuit may then provide the second signal to the second decoupling element, before the second signal is provided to the wireless communication unit.

In some embodiments, the first decoupling element is configured to pass the first signal having the first frequency, and suppress the second signal, having the second frequency, and/or wherein the second decoupling element is configured to pass the second signal having the second frequency, and suppress the first signal having the first frequency. Thus, the function of the decoupling element may be to decouple, separate, filter and/or split the signal, such that only the signal, or the part of the signal, having the desired frequency is passed on or passed through or enabled to continue in that signal path. The other signal, or other part of the signal, not having the desired frequency is suppressed or blocked or disabled from continuing in that signal path.

In some embodiments, the first decoupling element has a first impedance at the first frequency and a second impedance at the second frequency, the second impedance being higher than 10 times a first standard reference impedance, the first standard reference impedance matching the first impedance. In some embodiments, the second decoupling element has a third impedance at the first frequency and a fourth impedance at the second frequency, the third impedance being higher than 10 times a second standard reference impedance, the second standard reference impedance matching the fourth impedance.

The first standard reference impedance ($1^{st}$ Std ref Z) may be such as 50 ohm, or 75 ohm. The second impedance, Z2, e.g. the magnitude |Z2|, may be higher than the first standard reference impedance, e.g. higher than the magnitude of the first standard reference impedance |Z|. The first standard reference impedance may match the first impedance, Z1, e.g. matching the magnitude |Z1|. Matching may mean equal to or about equal to, such as about within 3 times lower or higher.

When impedance Z is written in the following, it is understood that it may be the magnitude of the impedance, |Z|, that is meant, as impedance is a complex number. Thus:

$$Z2 > 1\text{st Std ref } Z \sim Z1$$

For example:

$$Z2 > 10 \times 1\text{st Std ref } Z$$

For example:

$$Z2 > 18 \times 1\text{st Std ref } Z$$

The second impedance may for example be more than 500 ohm, such as about 500 ohm, 600 ohm, 700 ohm, 800 ohm, 900 ohm or 1000 ohm.

The first impedance may for example be equal to or lower than 50 ohm, such as about 1 ohm, 2 ohm, 3 ohm, 4 ohm, 5 ohm, 6 ohm, 7 ohm, 8 ohm, 9 ohm, 10 ohm, 15 ohm, 20 ohm, 25 ohm, 30 ohm, 35 ohm, 40 ohm, 45 ohm or 50 ohm.

The second impedance, Z2, may be higher than the first standard reference impedance, such as about 2 times higher, 5 times higher, 10 times higher, 12 times higher, 15 times higher, 18 times higher or 20 times higher.

If the first standard reference impedance is 50 ohm, and the second impedance is 18 times higher than the first standard reference impedance, the second impedance is (50 ohm x 18 =) 900 ohm. An impedance of 900 ohm may be considered a high impedance.

If the first standard reference impedance is 50 ohm, and the first impedance matches the first standard reference impedance, the first impedance may for example be about 50 ohm, such as lower than 50 ohm. An impedance of 10 ohm may be considered a low impedance. Low impedance may be defined as lower than the first standard reference impedance, such as lower than 50 ohm.

The second standard reference impedance ($2^{nd}$ Std ref Z) may be such as 50 ohm, or 75 ohm. The third impedance, Z3, e.g. the magnitude |Z3|, may be higher than the second standard reference impedance, e.g. higher than the magnitude of the second standard reference impedance |Z|. The second standard reference impedance may match the fourth impedance, Z4, e.g. matching the magnitude |Z4|. Matching may mean equal to or about equal to, such as about within 3 times lower or higher.

When impedance Z is written in the following, it is understood that it may be the magnitude of the impedance, |Z|, that is meant, as impedance is a complex number.

Thus:

$$Z3 > 2^{nd}\ Std\ ref\ Z \sim Z4$$

For example:

$$Z3 > 10 \times 2nd\ Std\ ref\ Z$$

For example:

$$Z3 > 18 \times 2^{nd}\ Std\ ref\ Z$$

The third impedance may for example be more than 500 ohm, such as about 500 ohm, 600 ohm, 700 ohm, 800 ohm, 900 ohm or 1000 ohm.

The fourth impedance may for example be equal to or lower than 50 ohm, such as about 1 ohm, 2 ohm, 3 ohm, 4 ohm, 5 ohm, 6 ohm, 7 ohm, 8 ohm, 9 ohm, 10 ohm, 15 ohm, 20 ohm, 25 ohm, 30 ohm, 35 ohm, 40 ohm, 45 ohm or 50 ohm.

The third impedance, Z3, may be higher than the second standard reference impedance, such as about 2 times higher, 5 times higher, 10 times higher, 12 times higher, 15 times higher, 18 times higher or 20 times higher.

If the second standard reference impedance is 50 ohm, and the third impedance is 18 times higher than the second standard reference impedance, the third impedance is (50 ohm x 18 =) 900 ohm. An impedance of 900 ohm may be considered a high impedance.

If the second standard reference impedance is 50 ohm, and the fourth impedance matches the second standard reference impedance, the fourth impedance may for example be about 50 ohm, such as lower than 50 ohm. An impedance of 10 ohm may be considered a low impedance. Low impedance may be defined as lower than the second standard reference impedance, such as lower than 50 ohm.

The first standard reference impedance and second standard reference impedance may be the same or different. The second impedance and the third impedance may be the same or different. The first impedance and the fourth impedance may be the same or different.

In some embodiments, the first decoupling element and/or the second decoupling element comprises a filter.

In some embodiments, the filter is a band pass filter, a low pass filter, a high pass filter, a surface acoustic wave (SAW) filter, a band stop filter, a notch filter, and/or a bulk acoustic wave (BAW) filter.

In some embodiments, the filter is implemented as a resonance circuit, the resonance circuit comprising a coil, a capacitor, and/or an inductor.

In some embodiments, the first signal has a first bandwidth, the first frequency being a centre frequency of the first bandwidth, and wherein the second signal has a second bandwidth, the second frequency being a centre frequency of the second bandwidth. Thus, the signals may have a bandwidth and a centre frequency. The first frequency f1 may be 1.6 GHz. The first bandwidth may be 1.5 GHz -1.7 GHz. The centre frequency of the first bandwidth may be 1.6 GHz. The second frequency f2 may be 2.4 GHz. The second bandwidth may be 2.3 GHz -2.5 GHz. The centre frequency of the second bandwidth may be 2.4 GHz, such as 2.45 GHz.

In some embodiments, the first impedance matching circuit and/or the second impedance matching circuit comprises one or more of a transformer, a resistor, an inductor, a capacitor and/or transmission lines. The impedance matching may be performed in any manner known to the person skilled in the art, and the first impedance matching circuit and the second impedance matching circuits may be implemented to perform such known impedance matching.

In some embodiments, the first impedance matching circuit is configured to match the impedance of the first signal having the first frequency with the one or more wireless communication units using a first standard reference impedance, while maintaining an impedance higher than a threshold impedance at the second frequency. In some embodiments the second impedance matching circuit is configured to match the impedance of the second signal having the second frequency with the one or more wireless communication units using the first standard reference impedance, while maintaining an impedance higher than the threshold impedance at the first frequency. The first standard reference impedance may be about 50 ohm.

In some embodiments, the threshold impedance is 10 times the first standard reference impedance. The first standard reference impedance may for example be about 50 ohm. The threshold impedance may be more than 10 times higher the first standard reference impedance, such as 15 times, 18 times, or 20 times higher than the first standard reference impedance. Thus, if the first standard reference impedance is 50 ohm, and the threshold impedance is 10 times higher, the threshold impedance is 500 ohm.

According to an aspect, disclosed is a method of frequency separation in a hearing device. The hearing device comprises one or more wireless communication units connected with an impedance matching component. The impedance matching component comprising a first impedance matching component and a second impedance matching component. The first impedance matching component comprises a first decoupling element and a first impedance matching circuit. The second impedance matching component comprises a second decoupling element and a second impedance matching circuit. The method comprises receiving at least a first signal, having a first frequency, and a second signal, having a second frequency, at the impedance matching component. The method comprises, in the first decoupling element, passing the first signal and suppressing the second signal. The method comprises, in the second decoupling element, passing the second signal and suppressing the first signal. The method comprises, from the first impedance matching component, providing a first impedance matched signal having the first frequency, to one of the one or more wireless communication unit. The method comprises, from the second impedance matching component, providing a second impedance matched signal having the second frequency, to one of the one or more wireless communication unit.

It is envisaged that even though the present description includes examples of a first signal and a second signal having a first and a second frequency, respectively, the present disclosure does not limit the invention, but encompasses embodiments having also third, fourth, fifth and sixth signals having third, fourth, fifth and sixth frequencies, respectively. Likewise the antennas may provide third, fourth, fifth and sixth signals having third, fourth, fifth and sixth frequencies, respectively. Likewise WI-FI units may comprise third, fourth, fifth and sixth signals having third, fourth, fifth and sixth frequencies, respectively.

Thus, any number n of signals may be provided as input to the system. Any number m of signals may be provided as output from the system.

The present invention relates to different aspects including the hearing device and method described above and in the following, and corresponding systems, hearing devices, hearing aids, hearing protection devices, methods, and system parts, each yielding one or more of the benefits and advantages described in connection with the first mentioned aspect, and each having one or more embodiments corresponding to the embodiments described in connection with the first mentioned aspect and/or disclosed in the appended claims.

## BRIEF DESCRIPTION OF THE DRAWINGS

The above and other features and advantages will become readily apparent to those skilled in the art by the following detailed description of exemplary embodiments thereof with reference to the attached drawings, in which:

Fig. 1 schematically illustrates an exemplary hearing device having a first antenna and a first wireless communication unit.

Fig. 2 schematically illustrates an exemplary hearing device having a first antenna, and a first and a second wireless communication unit.

Fig. 3 schematically illustrates an exemplary hearing device having a first and a second antenna, and a first wireless communication unit.

Fig.4 schematically illustrates an exemplary method of frequency separation in a hearing device.

Fig. 5 schematically illustrates an exemplary hearing device having n input signals from antenna(s) and m output signals to wireless communication unit(s).

Fig. 6 schematically illustrates an exemplary hearing device.

## DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

Fig. 1 schematically illustrates an exemplary hearing device 2. The hearing device 2 comprises a first wireless communication unit 4 connected with an impedance matching component 6. The impedance matching component 6 is configured for receiving at least a first signal 8 having a first frequency f1 and a second signal 10 having a second frequency f2. The impedance matching component 6 comprises a first impedance matching component 12 for the first signal 8 and the second signal 10. The first impedance matching component 12 comprises a first decoupling element 14 configured to decouple the first signal 8 and the second signal 10, and a first impedance matching circuit 16 configured to receive the first signal 8. The impedance matching component 6 comprises a second impedance matching component 18 for the first signal 8 and the second signal 10. The second impedance matching component 18 comprises a second decoupling element 20, configured to decouple the first signal 8 and the second signal 10, and a second impedance matching circuit 22 configured to receive the second signal 10. The first impedance matching component 12 provides a first impedance matched signal 24, having the first frequency f1, to the first wireless communication unit 4. The second impedance matching component 18 provides a second impedance matched signal 26, having the second frequency f2, to the first wireless communication unit 4.

The first decoupling element 14 is configured to pass the first signal 8 having the first frequency f1. The first decoupling element 14 is configured to suppress the second signal 10 having the second frequency f2. The second decoupling element 20 is configured to pass the second signal 10 having the second frequency f2. The second decoupling element 20 is configured to suppress the first signal 8 having the first frequency f1.

The first decoupling element 14 is configured for providing the first signal 8 to the first impedance matching circuit 16. The second decoupling element 20 is configured for providing the second signal 10 to the second impedance matching circuit 22.

The hearing device 2 comprises one or more wireless communication units. In the embodiment of fig. 1, the one or more wireless communication units comprises the first wireless communication unit 4.

The first wireless communication unit 4 is interconnected with one or more antennas, the one or more antennas being configured for emission and reception of one or more electromagnetic signals.

In fig. 1, the one or more antennas comprises a first antenna 28 configured for emission and reception of the first signal 8 having the first frequency f1 and the second signal 10 having the second frequency f2.

Fig. 2 schematically illustrates an exemplary hearing device 2. The hearing device 2 comprises two wireless communication units, a first wireless communication unit 4 and a second wireless communication unit 30. The wireless communication units 4, 30 are connected with an impedance matching component 6. The impedance matching component 6 is configured for receiving at least a first signal 8 having a first frequency f1 and a second signal 10 having a second frequency f2. The impedance matching component 6 comprises a first impedance matching component 12 for the first signal 8 and the second signal 10. The first impedance matching component 12 comprises a first decoupling element 14 configured to decouple the first signal 8 and the second signal 10, and a first impedance matching circuit 16 configured to receive the first signal 8. The impedance matching component 6 comprises a second impedance matching component 18 for the first signal 8 and the second signal 10. The second impedance matching component 18 comprises a second decoupling element 20 configured to decouple the first signal 8 and the second signal 10, and a second impedance matching circuit 22 configured to receive the second signal 10. The first impedance matching component 12 provides a first impedance matched signal 24, having the first frequency f1, to the first wireless communication unit 4. The second impedance matching component 18 provides a second impedance matched signal 26, having the second frequency f2, to the second wireless communication unit 30.

The first decoupling element 14 is configured to pass the first signal 8 having the first frequency f1. The first decoupling element 14 is configured to suppress the second signal 10 having the second frequency f2. The second decoupling element 20 is configured to pass the second signal 10 having the second frequency f2. The second decoupling element 20 is configured to suppress the first signal 8 having the first frequency f1.

The first decoupling element 14 is configured for providing the first signal 8 to the first impedance matching circuit 16. The second decoupling element 20 is configured for providing the second signal 10 to the second impedance matching circuit 22.

The first wireless communication unit 4 and the second wireless communication unit 30 are interconnected with one or more antennas, the one or more antennas being configured for emission and reception of one or more electromagnetic signals. The first wireless communication unit 4 and the second wireless communication unit 30 are interconnected with one or more antennas via the impedance matching component 6.

In fig. 2, the one or more antennas comprises a first antenna 28 configured for emission and reception of the first signal 8 having the first frequency f1 and the second signal 10 having the second frequency f2.

Fig. 3 schematically illustrates an exemplary hearing device 2. The hearing device 2 comprises one wireless communication unit 4 connected with an impedance matching component 6. The impedance matching component 6 is configured for receiving at least a first signal 8 having a first frequency f1 and a second signal 10 having a second frequency f2. The impedance matching component 6 comprises a first impedance matching component 12 for the first signal 8. The first impedance matching component 12 comprises a first decoupling element 14 and a first impedance matching circuit 16. The impedance matching component 6 comprises a second impedance matching component 18 for the second signal 10. The second impedance matching component 18 comprises a second decoupling element 20 and a second impedance matching circuit 22. The first impedance matching component 12 provides a first impedance matched signal 24, having the first frequency f1, to the wireless communication unit 4. The second impedance matching component 18 provides a second impedance matched signal 26, having the second frequency f2, to the wireless communication unit 4.

The first decoupling element 14 is configured to pass the first signal 8 having the first frequency f1. The first decoupling element 14 is configured to suppress the second signal 10 having the second frequency f2. The second decoupling element 20 is configured to pass the second signal 10 having the second frequency f2. The second decoupling element 20 is configured to suppress the first signal 8 having the first frequency f1.

The first wireless communication unit 4 is interconnected with one or more antennas, the one or more antennas being configured for emission and reception of one or more electromagnetic signals.

In fig. 3, the one or more antennas comprises a first antenna 28 and a second antenna 32. The first antenna 28 is configured for emission and reception of the first signal 8 having the first frequency f2. The second antenna 32 is configured for emission and reception of the second signal 10 having the second frequency f2.

The first impedance matching circuit 16 is configured for providing the impedance matched first signal 8 to the first decoupling element 14. The second impedance matching circuit 22 is configured for providing the impedance matched second signal 10 to the second decoupling element 20. Thus, in fig. 3, when there are two antennas 28, 32, the first antenna 28 provides the first signal 8 having the first frequency f1, and the second antenna 32 provides the second signal 10 having the second frequency f2, and therefore decoupling or separation of a signal 8, 10 in a decoupling element 14, 20 to pass a certain frequency f1, f2 may not be performed before performing impedance matching in an impedance matching circuit 16, 22. Instead impedance matching in an impedance matching circuit 16, 22 may be performed before decoupling or separation of a signal 8, 10 in a decoupling element 14, 20.

Fig. 4 schematically illustrates a flow chart of a method 400 of frequency separation in a hearing device. The hearing device comprises one or more wireless communication units connected with an impedance matching component. The impedance matching component comprising a first impedance matching component and a second impedance matching component. The first impedance matching component comprises a first decoupling element and a first impedance matching circuit. The second impedance matching component comprises a second decoupling element and a second impedance matching circuit.

The method 400 comprises receiving 402 at least a first signal, having a first frequency, and a second signal, having a second frequency, at the impedance matching component.

The method 400 comprises, in the first decoupling element, passing 404 the first signal and suppressing the second signal.

The method 400 comprises, in the second decoupling element, passing 406 the second signal and suppressing the first signal.

The method 400 comprises, from the first impedance matching component, providing 408 a first impedance matched signal having the first frequency, to one of the one or more wireless communication unit.

The method 400 comprises, from the second impedance matching component, providing 410 a second impedance matched signal having the second frequency, to one of the one or more wireless communication unit.

Fig. 5 schematically illustrates an exemplary hearing device having n input signals from antenna(s) and m output signals to wireless communication unit(s). Fig. 5 schematically illustrates an exemplary hearing device 2. The hearing device 2 comprises a first wireless communication unit 4 connected with an impedance matching component 6. The impedance matching component 6 is configured for receiving at least a first signal 8 having a first frequency f1 and a second signal 10 having a second frequency f2 and a third signal 34 having a third frequency f3 and a fourth signal 36 having a fourth frequency f4. The impedance matching component 6 comprises a first impedance matching component 12 for the first signal 8, the second signal 10, the third signal 34 and the fourth signal 36. The first impedance matching component 12 comprises a first decoupling element 14 configured to decouple the first signal 8, the second signal 10, the third signal 34 and the fourth signal 36, and a first impedance matching circuit 16 configured to receive the first signal 8. The impedance matching component 6 comprises a second impedance matching component 18 for the first signal 8, the second signal 10, the third signal 34 and the fourth signal 36. The second impedance matching component 18 comprises a second decoupling element 20, configured to decouple the first signal 8, the second signal 10, the third signal 34 and the fourth signal 36, and a second impedance matching circuit 22 configured to receive the second signal 10.

The impedance matching component 6 comprises a third impedance matching component 38 for the first signal 8, the second signal 10, the third signal 34 and the fourth signal 36. The third impedance matching component 38 comprises a third decoupling element 40, configured to decouple the first signal 8, the second signal 10, the third signal 34 and the fourth signal 36, and a third impedance matching circuit 42 configured to receive the third signal 34.

The impedance matching component 6 comprises a fourth impedance matching component 44 for the first signal 8, the second signal 10, the third signal 34 and the fourth signal 36. The fourth impedance matching component 44 comprises a fourth decoupling element 46, configured to decouple the first signal 8, the second signal 10, the third signal 34 and the fourth signal 36, and a fourth impedance matching circuit 48 configured to receive the fourth signal 36.

The first impedance matching component 12 provides a first impedance matched signal 24, having the first frequency f1, to the first wireless communication unit 4. The second impedance matching component 18 provides a second impedance matched signal 26, having the second frequency f2, to the first wireless communication unit 4.

The third impedance matching component 38 provides a third impedance matched signal 50, having the third frequency f3, to the first wireless communication unit 4. The fourth impedance matching component 44 provides a fourth impedance matched signal 52, having the fourth frequency f4, to the first wireless communication unit 4.

The first decoupling element 14 is configured to pass the first signal 8 having the first frequency f1. The first decoupling element 14 is configured to suppress the second signal 10 having the second frequency f2, the third signal 34 having the third frequency f3, and the fourth signal 36 having the fourth frequency f4.

The second decoupling element 20 is configured to pass the second signal 10 having the second frequency f2. The second decoupling element 20 is configured to suppress the first signal 8 having the first frequency f1, the third signal 34 having the third frequency f3, and the fourth signal 36 having the fourth frequency f4.

The third decoupling element 40 is configured to pass the third signal 34 having the third frequency f3. The third decoupling element 40 is configured to suppress the first signal having the first frequency f1, the second signal 10 having the second frequency f2, and the fourth signal 36 having the fourth frequency f4.

The fourth decoupling element 46 is configured to pass the fourth signal 36 having the fourth frequency f4. The fourth decoupling element 46 is configured to suppress the first signal 8 having the first frequency f1, the second signal having the second frequency f2 and the third signal 34 having the third frequency f3.

The hearing device 2 comprises one or more wireless communication units. In the embodiment of fig. 5, the one or more wireless communication units are shown as comprising the first wireless communication unit 4. However, it is understood that there may be more wireless communication units, such as a second wireless communication unit 30, a third wireless communication unit and/or a fourth wireless communication unit.

The wireless communication unit(s) is/are interconnected with one or more antennas, the one or more antennas being configured for emission and reception of one or more electromagnetic signals.

In fig. 5, the one or more antennas are shown as comprising a first antenna 28 configured for emission and reception of the first signal 8 having the first frequency f1, and the second signal 10 having the second frequency f2, and the third signal 34 having the third frequency f3, and the fourth signal 36 having the fourth frequency f4. However, it is understood that there may be more antennas, such as a second antenna 32, a third antenna and/or a fourth antenna.

Thus, the hearing device 2 has n input signals, 8, 10, 34, 36, from antenna(s) and m output signals 24, 26, 50, 52, to wireless communication unit(s).

Fig. 6 schematically illustrates an exemplary hearing device. The hearing device 2 comprises a processing unit 54 configured to provide a processed output signal for compensating a hearing loss of a user. The hearing device 2 comprises a microphone 56 connected to the processing unit for converting an audio input signal into a microphone output signal to form an input signal to the processing unit 54. The hearing device 2 comprises a receiver 58 connected to the processing unit 54 for converting the processed output signal into an audio output signal. The hearing device 2 comprises one or more wireless communication units 4 connected to the processing unit 54 for receiving information from a wireless network. The hearing device 2 further comprises one or more antennas 28, such as a 2.4 GHz radio antenna and/or a 1.6 GHz radio antenna, connected to the wireless communication units 4 for communicating with and/or for receiving information from the wireless network.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

LIST OF REFERENCES

2 hearing device
4 first wireless communication unit
6 impedance matching component
8 first signal
f1 first frequency
10 second signal
f2 second frequency
12 first impedance matching component
14 first decoupling element
16 first impedance matching circuit
18 second impedance matching component
20 second decoupling element
22 second impedance matching circuit
24 first impedance matched signal
26 second impedance matched signal
28 first antenna
30 second wireless communication unit
32 second antenna
34 third signal
36 fourth signal
38 third impedance matching component
40 third decoupling element
42 third impedance matching circuit
44 fourth impedance matching component
46 fourth decoupling element
48 fourth impedance matching circuit
50 third impedance matched signal
52 fourth impedance matched signal
54 processing unit
56 microphone
58 receiver

## Claims

**1.** A hearing device comprising:

- one or more wireless communication units connected with an impedance matching component; the impedance matching component being configured for receiving at least a first signal having a first frequency and a second signal having a second frequency;

the impedance matching component comprising:

- a first impedance matching component for the first signal, comprising a first decoupling element and a first impedance matching circuit; and
- a second impedance matching component for the second signal, comprising a second decoupling element and a second impedance matching circuit;

wherein the first impedance matching component provides a first impedance matched signal having the first frequency to one of the one or more wireless communication unit, and the second impedance matching component provides a second impedance matched signal having the second frequency to one of the one or more wireless communication unit.

**2.** The hearing device according to claim 1, wherein the first decoupling element is configured for providing the first signal to the first impedance matching circuit, and the second decoupling element is configured for providing the second signal to the second impedance matching circuit.

**3.** The hearing device according to claim 1 or 2, wherein the one or more wireless communication units comprises a first wireless communication unit, and wherein the first impedance matching circuit provides the first impedance matched signal having the first frequency to the first wireless communication unit, and the second impedance matching circuit provides the second impedance matched signal having the second frequency to the first wireless communication unit.

**4.** The hearing device according to claim 1 or 2, wherein the one or more wireless communication units comprises a first wireless communication unit and a second wireless communication unit, and wherein the first impedance matching circuit provides the first impedance matched signal having the first frequency to the first wireless communication unit, and the second impedance matching circuit provides the second impedance matched signal having the second frequency to the second wireless communication unit.

**5.** The hearing device according to claim 1, wherein at least one of the one or more wireless communication units is interconnected with one or more antennas, the one or more antennas being configured for emission and reception of one or more electromagnetic signals.

**6.** The hearing device according to claim 5, wherein the one or more antennas comprises a first antenna configured for emission and reception of the first signal having the first frequency and the second signal having the second frequency.

**7.** The hearing device according to claim 5, wherein the one or more antennas comprises a first antenna configured for emission and reception of the first signal having the first frequency, and a second antenna configured for emission and reception of the second signal having the second frequency.

**8.** The hearing device according to claim 1 or 7, wherein the first impedance matching circuit is configured for providing the first signal to the first decoupling element, and the second impedance matching circuit is configured for providing the second signal to the second decoupling element.

**9.** The hearing device according to any of the preceding claims, wherein the first decoupling element is configured to pass the first signal having the first frequency and suppress the second signal having the second frequency, and/or wherein the second decoupling element is configured to pass the second signal having the second frequency and suppress the first signal having the first frequency.

**10.** The hearing device according to claim 9, wherein the first decoupling element has a first impedance at the first frequency and a second impedance at the second frequency, the second impedance being higher than 10 times a first standard reference impedance, the first standard reference impedance matching the first impedance, and
the second decoupling element has a third impedance at the first frequency and a fourth impedance at the second frequency, the third impedance being higher than 10 times a second standard reference impedance, the second standard reference impedance matching the fourth impedance.

**11.** The hearing device according to any of the preceding claims, wherein the first decoupling element and/or the second decoupling element comprises a filter.

**12.** The hearing device according to the previous claim, wherein the filter is a band pass filter, a low pass filter, a high pass filter, a surface acoustic wave (SAW) filter, a band stop filter, a notch filter, and/or a bulk acoustic wave (BAW) filter.

**13.** The hearing device according to claims 11 or 12, wherein the filter is implemented as a resonance circuit, the resonance circuit comprising a coil, a capacitor, and/or an inductor.

**14.** The hearing device according to any of the preceding claims, wherein the first impedance matching circuit and/or the second impedance matching circuit comprises one or more of a transformer, a resistor, an inductor, a capacitor and/or transmission lines.

**15.** A method of frequency separation in a hearing device, the hearing device comprising one or more wireless communication units connected with an impedance matching component, the impedance matching component comprising a first impedance matching component and a second impedance matching component, the first impedance matching component comprising a first decoupling element and a first impedance matching circuit and the second impedance matching component comprising a second decoupling element and a second impedance matching circuit;
the method comprising:

receiving at least a first signal having a first frequency and a second signal having a second frequency at the impedance matching component;
in the first decoupling element, passing the first signal and suppressing the second signal;
in the second decoupling element, passing the second signal and suppressing the first signal;
from the first impedance matching component, providing a first impedance matched signal having the first frequency, to one of the one or more wireless communication unit, and
from the second impedance matching component ,providing a second impedance matched signal having the second frequency, to one of the one or more wireless communication unit.

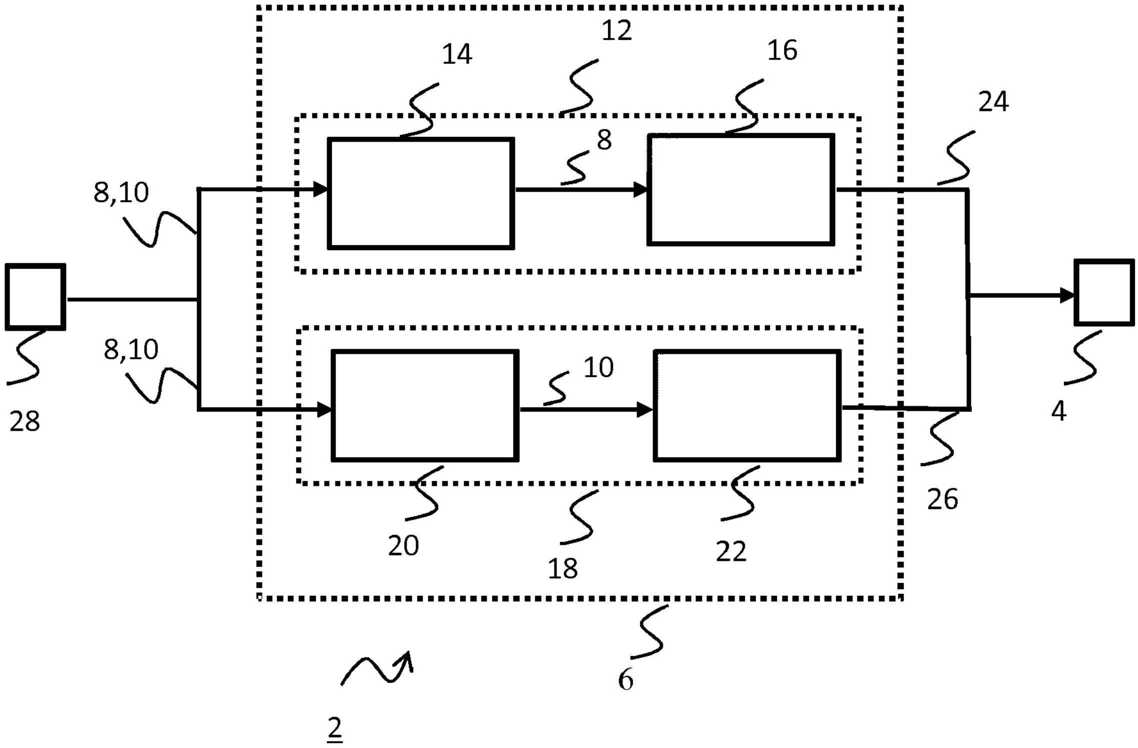


*Fig. 1*

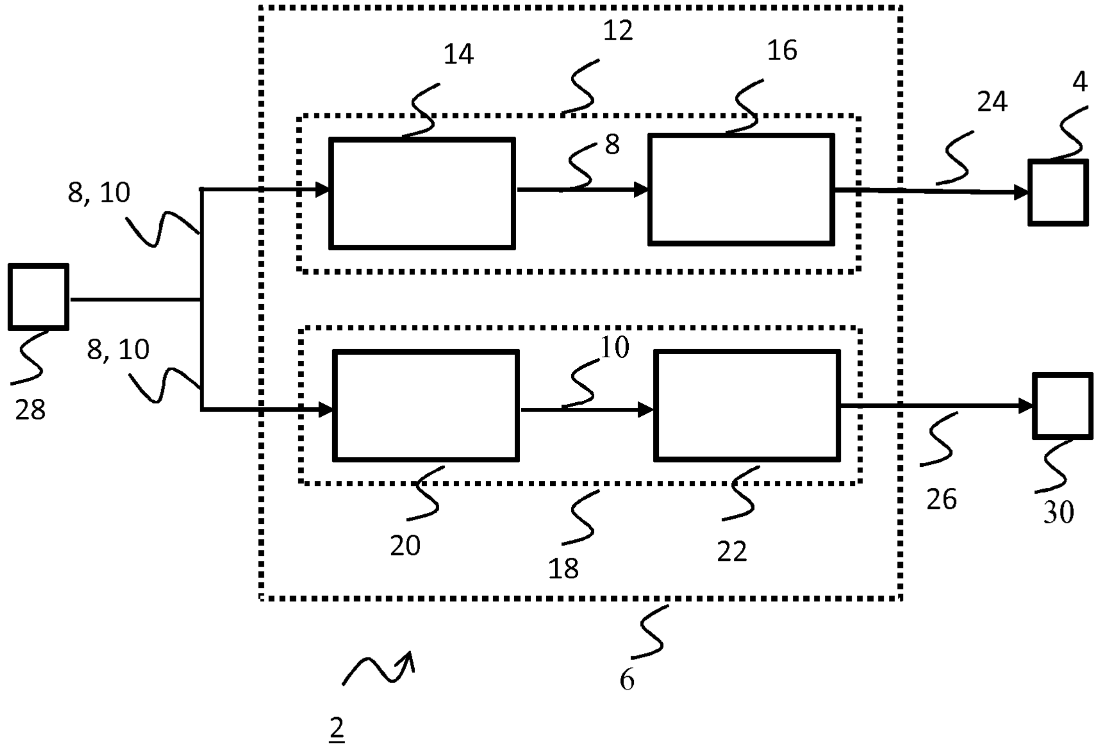


*Fig. 2*

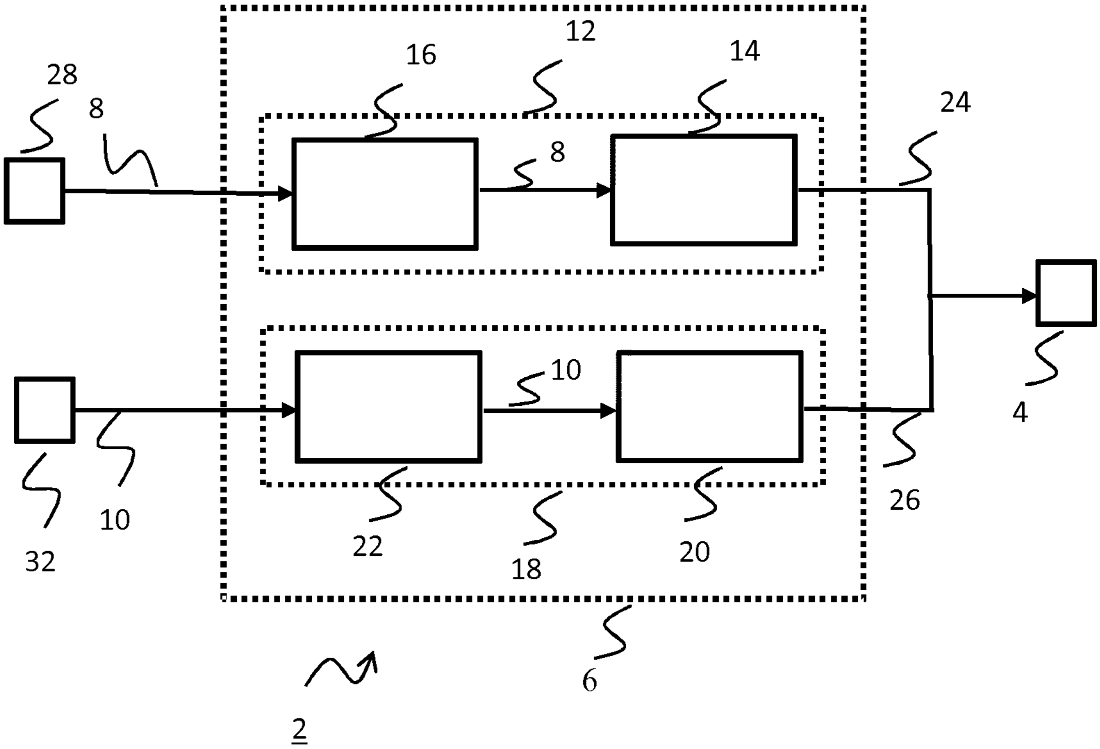


*Fig. 3*

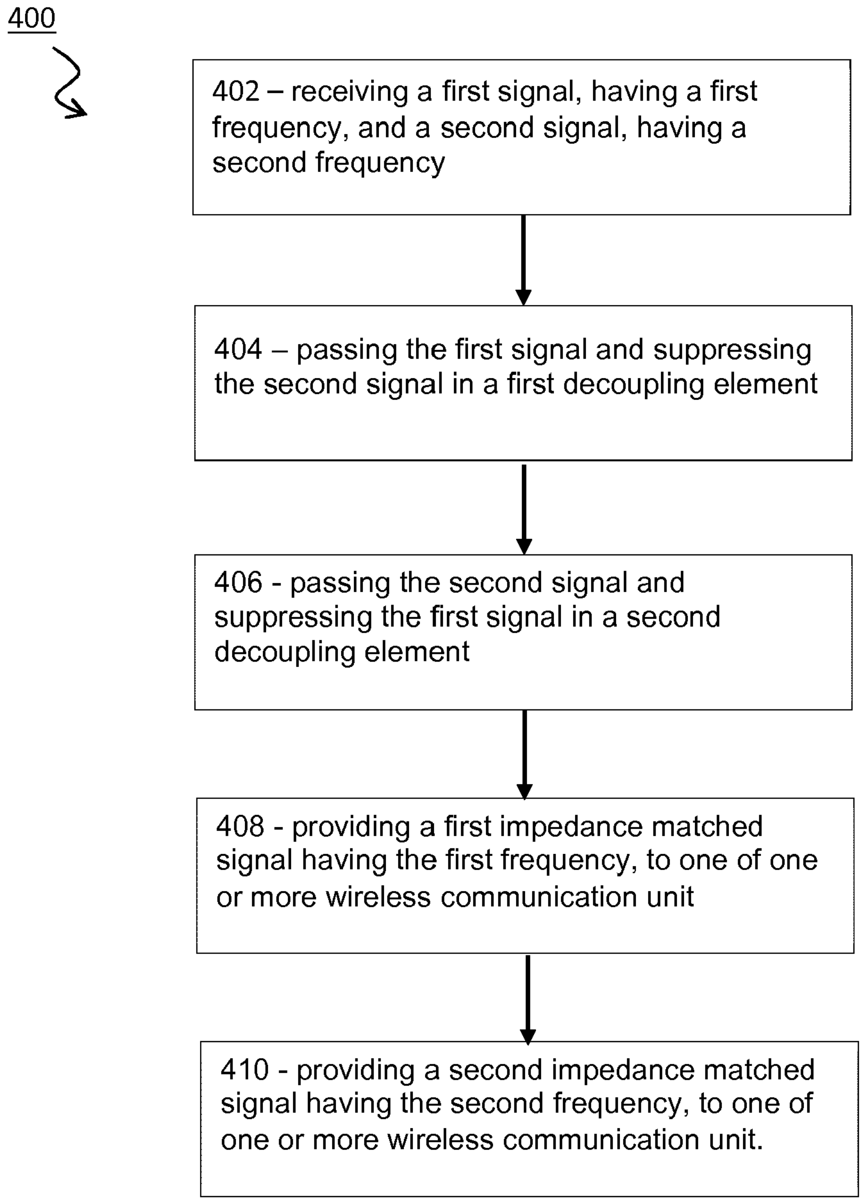
400
402 – receiving a first signal, having a first frequency, and a second signal, having a second frequency
404 – passing the first signal and suppressing the second signal in a first decoupling element
406 - passing the second signal and suppressing the first signal in a second decoupling element
408 - providing a first impedance matched signal having the first frequency, to one of one or more wireless communication unit
410 - providing a second impedance matched signal having the second frequency, to one of one or more wireless communication unit.

*Fig. 4*

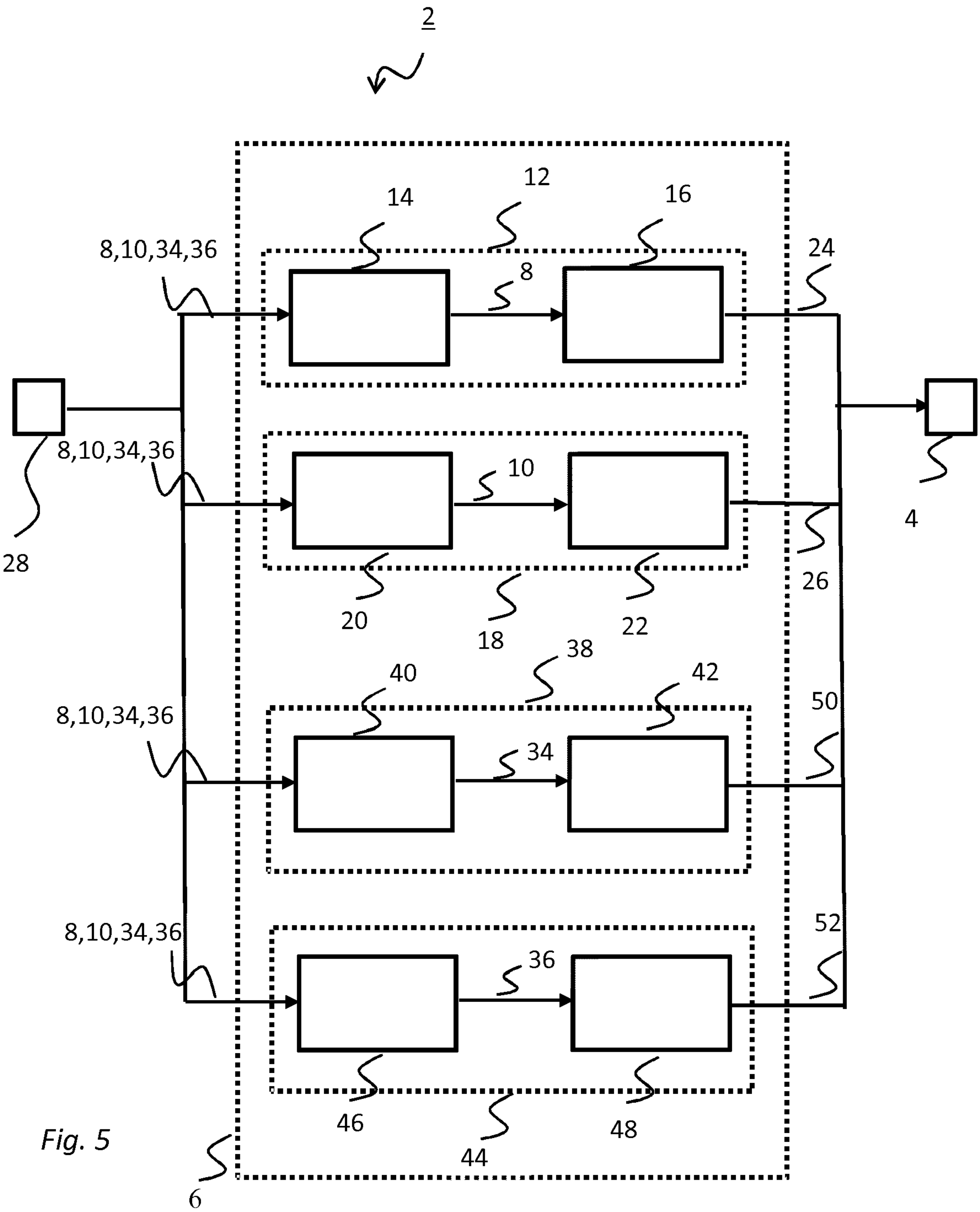
2
12
14
16
8,10,34,36
8
24
8,10,34,36
10
28
4
26
20
18
22
38
40
42
8,10,34,36
50
34
8,10,34,36
52
36
46
44
48
6

*Fig. 5*

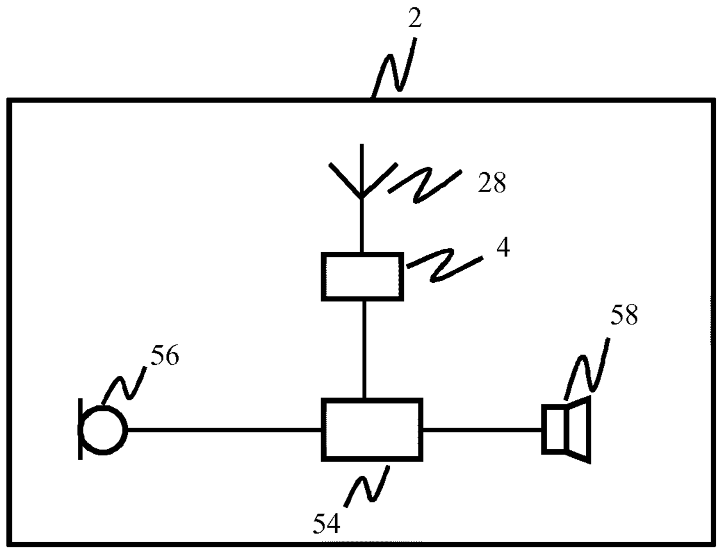


*Fig. 6*

Europäisches Patentamt
European Patent Office
Office européen des brevets

# EUROPEAN SEARCH REPORT

Application Number
EP 18 21 3962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 319 807 B2 (MESKENS WERNER [BE]; FRIEDING JAN [AU] ET AL.) 19 April 2016 (2016-04-19) * column 6, line 37 - column 9, line 38; figures 2,3A * | 1,2,4-15 | INV. H04R25/00 H01Q1/27 H04B1/18 |
| X | WO 2012/009172 A1 (APPLE INC [US]; SANGUINETTI LOUIE J [US] ET AL.) 19 January 2012 (2012-01-19) * page 10, line 16 - page 11, line 2; figures 1,2 * | 1,3,15 | |
| A | US 9 408 005 B2 (GN RESOUND AS [DK]) 2 August 2016 (2016-08-02) * column 8, line 45 - column 9, line 7; figure 2 * * column 9, lines 54-65 * | 1-15 | |

TECHNICAL FIELDS SEARCHED (IPC)

H04R
H01Q
H04B

The present search report has been drawn up for all claims

| Place of search | Date of completion of the search | Examiner |
|---|---|---|
| Munich | 21 May 2019 | Righetti, Marco |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 21 3962

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2019

| Patent document cited in search report | Publication date | Patent family member(s) | Publication date |
|---|---|---|---|
| US 9319807 B2 | 19-04-2016 | NONE | |
| WO 2012009172 A1 | 19-01-2012 | CN 103081446 A | 01-05-2013 |
| | | EP 2408115 A2 | 18-01-2012 |
| | | KR 20130043149 A | 29-04-2013 |
| | | US 2012009887 A1 | 12-01-2012 |
| | | WO 2012009172 A1 | 19-01-2012 |
| US 9408005 B2 | 02-08-2016 | CN 104640041 A | 20-05-2015 |
| | | JP 2015156634 A | 27-08-2015 |
| | | US 2015131832 A1 | 14-05-2015 |

EPO FORM P0459

For more details about this annex : see Official Journal of the European Patent Office, No. 12/82